# EUROPEAN PATENT SPECIFICATION

(11) **EP 4 239 715 B1**
(45) Date of publication and mention of the grant of the patent: **28.01.2026**
(21) Application number: 20959922.4
(22) Date of filing: 02.11.2020
(51) Int. Cl.: H01M 4/38, H01M 4/134, H01M 4/1395, H01M 4/04

(54) **LITHIUM SECONDARY BATTERY**
LITHIUMSEKUNDÄRBATTERIE
BATTERIE SECONDAIRE AU LITHIUM

(43) Date of publication of application: 06.09.2023
(73) Proprietor: TERAWATT TECHNOLOGY K.K., Yokohama-shi, Kanagawa 226-0026 (JP)
(72) Inventor: NAKANO, Masatsugu, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/041040
(87) International publication number: WO 2022/091407

(56) References cited:
- WO-A1-2015/145288
- WO-A1-2020/158181
- WO-A1-2020/158181
- JP-A- 2009 004 370
- JP-A- 2019 501 480
- US-A1- 2015 030 873
- US-A1- 2018 123 135

## Description

### Technical Field

The present invention relates to a lithium secondary battery.

### Background Art

The technology of converting natural energy such as solar light and window power into electric energy has recently attracted attentions. Under such a situation, various secondary batteries have been developed as a highly-safe power storage device capable of storing a lot of electric energy.

Among them, secondary batteries which perform charge/discharge by transferring metal ions between a positive electrode and a negative electrode are known to exhibit a high voltage and a high energy density. Typically, lithium-ion secondary batteries are known. Examples of the typical lithium-ion secondary batteries include those which have a positive electrode and a negative electrode having, introduced thereon, an active material capable of retaining lithium and perform charge/discharge by delivering or receiving lithium ions between a positive electrode active material and a negative electrode active material. In addition, as a secondary battery having a negative electrode for which no active material is used, there has been developed a lithium-metal secondary battery which precipitates a lithium metal on the surface of a negative electrode and thereby retaining lithium thereon.

For example, Patent Document 1 discloses a high-energy-density and high-output lithium-metal anode secondary battery having a volume energy density exceeding 1000 Wh/L and/or a mass energy density exceeding 350 Wh/kg at the time of discharge at at least a rate of 1C at room temperature. Patent Document 1 discloses the use of an ultrathin lithium-metal anode for manufacturing such a lithium-metal anode secondary battery.

Patent Document 2 discloses a lithium secondary battery including a positive electrode and a negative electrode, and a separation membrane and an electrolyte interposed therebetween. In the aforesaid negative electrode, metal particles formed on a negative electrode current collector are transferred from the positive electrode when the battery is charged and a lithium metal is formed on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly and therefore has improved performance and service life.

### Citation List

### Patent Document

Patent Document 1: Published Japanese Translation of PCT application No 2019-517722
Patent Document 2: Published Japanese Translation of PCT application No 2019-537226

Document WO 2020/158181 A1 also discloses lithium secondary batteries including specific negative electrodes.

### Summary

### Technical Problem

However, as a result of detailed investigation of conventional batteries including those described in the above patent documents, the present inventors have found that at least either one of their energy density and cycle characteristic is not sufficient.

For example, a typical secondary battery which carries out charge/discharge by delivering or receiving metal ions between a positive electrode active material and a negative electrode active material does not have a sufficient energy density. A conventional lithium-metal secondary battery which precipitates a lithium metal on the surface of a negative electrode and thereby retains lithium thereon, as described in the aforesaid patent document, is likely to form a dendrite-like lithium metal on the surface of the negative electrode after repetition of charge/discharge and cause a short circuit and capacity reduction. This results in an insufficient cycle characteristic.

In a lithium-metal secondary battery, a method of applying a large physical pressure on a battery to keep the interface between a negative electrode and a separator at high pressure has also been developed in order to suppress the discrete growth at the time of lithium metal precipitation. Application of such a high pressure however needs a large mechanical mechanism, leading to an increase in the weight and volume of the battery and a reduction in energy density as the entire battery.

The present invention has been made in consideration of the aforesaid problems and a purpose is to provide a lithium secondary battery having a high energy density and excellent in cycle characteristic.

### Solution to Problem

The lithium secondary battery according to one embodiment of the present invention has a positive electrode and a negative electrode not having a negative electrode active material. The negative electrode is Cu having a surface roughness maximum height Rz of 1.0 µm or less and an orientation plane of a (200) plane or a (220) plane.

Such a lithium secondary battery equipped with a negative electrode not having a negative electrode active material has a high energy density because a lithium metal precipitates on the surface of the negative electrode and charge/discharge is performed by the electrolysis and elution of the resulting precipitated lithium metal. Further, in the lithium secondary battery according to one embodiment of the present invention, the negative electrode thereof is used as Cu having a surface roughness maximum height Rz of 1.0 µm or less and an orientation plane of a (200) plane or a (220) plane. This makes it possible to improve the cycle characteristics of the secondary battery.

Further, in the lithium secondary battery according to one embodiment of the present invention, Cu as the negative electrode is formed by rolling. This makes it possible to take a configuration using Cu having a (200) plane or a (220) plane as an orientation plane, which is suitable for the negative electrode.

In the aforesaid lithium secondary battery, the lithium metal precipitates on the surface of the negative electrode and the dissolution of the precipitated lithium causes charge/discharge. In such an embodiment, the lithium secondary battery has a higher energy density.

The aforesaid lithium secondary battery preferably has no lithium foil on the surface of the aforesaid negative electrode before initial charge. In such a mode, it has more excellent safety and excellent productivity because it does not need a lithium metal having high flammability for the production.

The aforesaid lithium secondary battery has preferably an energy density of 350 Wh/kg or more.

### Advantageous Effects of Invention

The present invention makes it possible to provide a lithium secondary battery having a high energy density and an excellent cycle characteristic.

### Brief Description of Drawings

Fig. 1 is a schematic cross-sectional view of a lithium secondary battery according to First Embodiment.
Fig. 2 is a schematic cross-sectional view of the use of the lithium secondary battery according to First Embodiment.
Fig. 3 is a schematic cross-sectional view of a lithium secondary battery according to Second Embodiment.
Fig. 4 is a graph showing an example of an X-ray analysis measurement result of Cu used for a negative electrode.

### Description of Embodiments

The embodiment of the present invention (which will hereinafter be called "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

### [First Embodiment]

### (Lithium second battery)

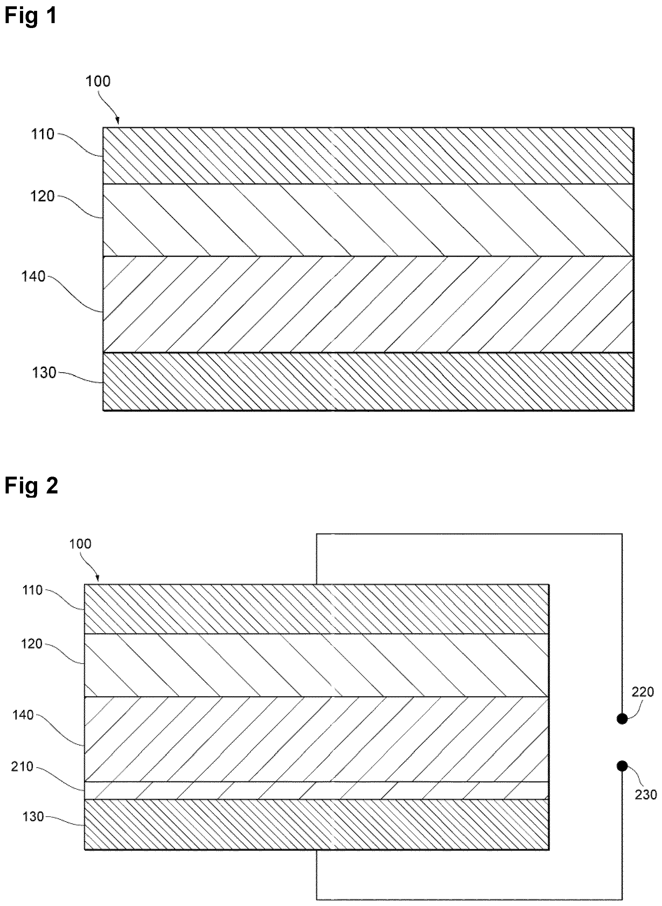

Fig. 1 is a schematic cross-sectional view of a lithium secondary battery of First Embodiment. As shown in Fig. 1, a lithium secondary battery 100 of First Embodiment is equipped with a positive electrode 120, a negative electrode 130 not having a negative electrode active material, and a separator 140 placed between the positive electrode 120 and the negative electrode 130. The positive electrode 120 has a positive electrode current collector 110 on the surface thereof opposite to the surface facing the separator 140.

### (Negative electrode)

The negative electrode 130 does not have a negative electrode active material. A lithium secondary battery equipped with a negative electrode having a negative electrode active material is hard to have an enhanced energy density due to the presence of the negative electrode active material. On the other hand, the lithium secondary battery 100 of the present embodiment is equipped with the negative electrode 130 not having a negative electrode active material so that it has no such a problem. In other words, the lithium secondary battery 100 of the present embodiment has a high energy density because a lithium metal precipitates on the surface of the negative electrode 130 and by the electrolysis and elution of the lithium metal thus precipitated, charge/discharge is performed.

In the present embodiment, the term "a lithium metal precipitates on the surface of the negative electrode" means that a lithium metal precipitates on at least one of the surface of the negative electrode, the surface of the metal layer formed on the surface of the negative electrode, and the surface of a solid electrolyte interface (SEI) layer, which will be described later, formed on the surface of the negative electrode. In the lithium secondary battery 100, therefore, the lithium metal may precipitate, for example, on the surface of the negative electrode 130 (the interface between the negative electrode 130 and the separator 140).

The term "negative electrode active material" as used herein means a material for retaining, on the negative electrode 130, a lithium ion or a lithium metal (which will hereinafter also called "carrier metal) which will serve as a charge carrier in a battery and it may be replaced by the term "host material of a carrier metal". Such a retaining mechanism is not particularly limited and examples of it include intercalation, alloying, and occlusion of metal clusters.

Such a negative electrode active material is not particularly limited and examples include carbon-based materials, metal oxides, and metals or alloys. The carbon-based material is not particularly limited and examples include graphene, graphite, hard carbon, mesoporous carbon, carbon nanotube, and carbon nanohorn. The metal oxide is not particularly limited and examples include titanium oxide-based compounds, tin oxide-based compounds, lithium oxide-based compounds, and cobalt oxide-based compounds. The metals or alloys are not particularly limited insofar as they can be alloyed with the carrier metal and examples include silicon, germanium, tin, lead, aluminum, and gallium, lithium, and alloys containing them.

As the negative electrode 130, Cu (copper) having no negative electrode active material is used. As the Cu of the negative electrode 130 of the present embodiment, there is used one obtained by subjecting a known surface treatment to Cu whose orientation plane becomes a (200) plane or a (220) plane by rolling a copper plate into a foil shape is used. Further, as this Cu, there is used one having a surface roughness maximum height Rz of 1.0 µm or less. Incidentally, the maximum height Rz of the surface roughness indicates the difference in height between the position where the height is the highest and the position where the height is the lowest on the Cu surface. Although the detailed mechanism of action is unknown, it has been confirmed that by adopting a specific orientation plane of Cu as the (200) plane or (220) plane and controlling the surface roughness Rz, the cycle characteristics of the secondary battery can be improved as shown in Examples to be described later.

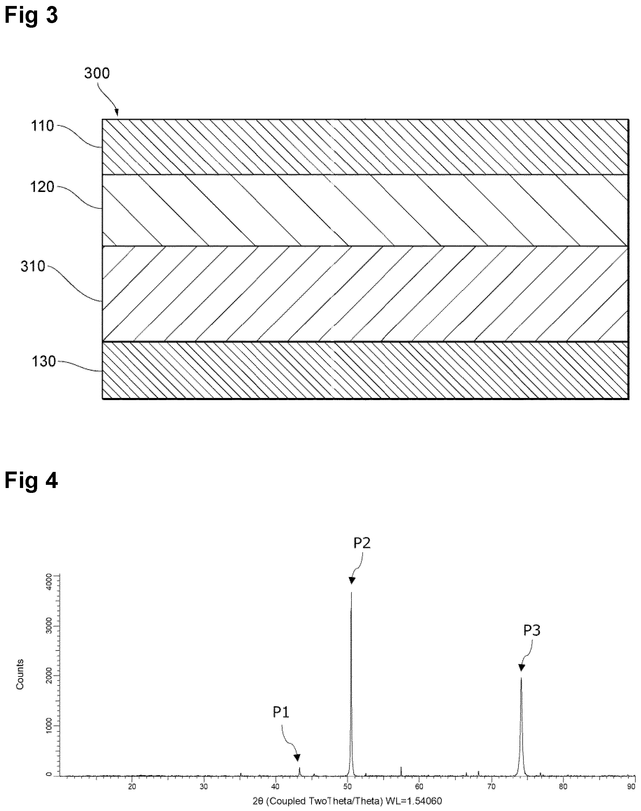

The orientation plane of Cu is defined as an orientation plane corresponding to the location where the highest peak intensity was obtained when the crystal structure of rolled Cu was evaluated by X-ray diffraction measurement (XRD) with a characteristic X-ray wavelength as 1.5406 Å. That is, the orientation plane of Cu is determined based on whether the obtained peak intensity is obtained at a position corresponding to either a (111) plane, a (200) plane, or a (220) plane. For example, when such a measurement result as shown in Fig. 4 is obtained, the peaks P1, P2, and P3 correspond to the orientation planes of the (111) plane, the (200) plane, and the (220) plane, respectively, and the highest peak intensity obtained is the peak P2 corresponding to the (200) plane. Thus, it can be said that the orientation plane of Cu from which such a measurement result can be obtained is the (200) plane.

The term "negative electrode does not have a negative electrode active material" as used herein means that the content of a negative electrode active material in the negative electrode is 10 mass% or less based on the total amount of the negative electrode. The content of a negative electrode active material in the negative electrode is preferably 5.0 mass% or less and it may be 1.0 mass% or less, 0.1 mass% or less, or 0.0 mass% or less, each based on the total amount of the negative electrode. The term "the lithium secondary battery 100 is equipped with a negative electrode not having a negative electrode active material" means that in a commonly used sense, the lithium secondary battery 100 is an anode-free secondary battery, a zero-anode secondary battery, or an anode-less secondary battery. The anode-free secondary battery refers to a battery system which includes neither the lithium metal nor the negative electrode active material and is comprised only of a current collector on the negative electrode side.

It is to be noted that in a typical lithium-ion secondary battery, the capacity of the negative electrode active material which the negative electrode has is set to be equal to that of the positive electrode. Therefore, it means that even when the capacity of the negative electrode active material in the negative electrode 130 is smaller than that of the positive electrode 120, for example, 20% or less, 15% or less, 10% or less, or 5% or less, "the negative electrode has no negative electrode active material."

The average thickness of the negative electrode 130 is preferably 4 µm or more and 20 µm or less, more preferably 5 µm or more and 18 µm or less, and still more preferably 6 µm or more and 15 µm or less. In such a mode, since the occupation volume of the negative electrode 130 in the lithium secondary battery 100 decreases, the lithium secondary battery 100 has a more improved energy density.

### (Positive electrode)

The positive electrode 120 contains a positive electrode active material so that the lithium secondary battery 100 has excellent stability and a high output voltage. The term "positive electrode active material" as used herein means a material for retaining a lithium ion on the positive electrode 120 and the material may also be referred to as a host material for the lithium ion. Such a positive electrode active material is not particularly limited and examples include metal oxides and metal phosphates. The aforesaid metal oxides are not particularly limited and examples include cobalt oxide-based compounds, manganese oxide-based compounds, and nickel oxide-based compounds, etc. The aforesaid metal phosphates are not particularly limited and examples include iron phosphate-based compounds and cobalt phosphate-based compounds. Examples of typical positive electrode active materials include LiCoO₂, LiNiₓCo_{y}Mn_{z}O (x+y+z=1), LiNiₓMn_{y}O (x+y=1), LiNiO₂, LiMn₂O₄, LiFePO, LiCoPO, LiFeOF, LiNiOF, and TiS₂. One or more of the aforesaid positive electrode active materials may be used either singly or in combination.

The positive electrode 120 may contain a component other than the above positive electrode active material. Such a component is not particularly limited and examples include known conductive additives, binders, solid polymer electrolytes, and inorganic solid electrolytes.

The conductive additive to be contained in the positive electrode 120 is not particularly limited and examples include carbon black, single wall carbon nanotube (SWCNT), multi-wall carbon nanotube (MWCNT), carbon nanofiber (CF), and acetylene black, etc. The binder is not particularly limited and examples include polyvinylidene fluoride, polytetrafluoroethylene, styrene butadiene rubber, acrylic resins, and polyimide resins, etc.

The content of the positive electrode active material in the positive electrode 120 may be, for example, 50 mass% or more and 100 mass% or less, 1 with respect to the total amount of the positive electrode 120. The content of the conductive additive in the total amount of the positive electrode 120 may be, for example, 0.5 mass% or more and 30 mass% or less. The content of the binder in the total amount of the positive electrode 120 may be, for example, 0.5 mass% or more and 30 mass% or less. The sum of the contents of the solid polymer electrolyte and the inorganic solid electrolyte in the total amount of the positive electrode 120 may be, for example, 0.5 mass% or more and 30 mass% or less.

### (Positive electrode current collector)

The positive electrode 120 has, on one side thereof, a positive electrode current collector 110. The positive electrode current collector 110 is not particularly limited insofar as it is a conductor not reactive with a lithium ion in the battery. Examples of such a positive electrode current collector include aluminum.

The average thickness of the positive electrode current collector 110 is preferably 4 µm or more and 20 µm or less, more preferably 5 µm or more and 18 µm or less, and still more preferably 6 µm or more and 15 µm or less. In such a mode, an occupation volume of the positive electrode current collector 110 in the lithium secondary battery 100 decreases and the resulting lithium secondary battery 100 therefore has a more improved energy density.

### (Separator)

The separator 140 is a member for separating the positive electrode 120 from the negative electrode 130 to prevent a short circuit of the battery and in addition, for securing the ionic conductivity of a lithium ion which serves as a charge carrier between the positive electrode 120 and the negative electrode 130. It is composed of a material not having electron conductivity and unreactive to the lithium ion. The separator 140 also has a role of retaining an electrolyte solution. No limitation is imposed on the separator 140 insofar as it plays the aforesaid role and examples include porous polyethylene (PE) and polypropylene (PP), and a stacked structure of them.

The separator 140 may be covered with a separator cover layer. The separator cover layer may cover both of the surfaces of the separator 140 or may cover only one of them. The separator cover layer is not particularly limited insofar as it is a member having ionic conductivity and unreactive to a lithium ion and is preferably capable of firmly adhering the separator 140 to a layer adjacent to the separator 140. Such a separator cover layer is not particularly limited and examples include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator cover layer may be a member obtained by adding, to the aforesaid binder, inorganic particles such as silica, alumina, titania, zirconia, magnesium oxide, magnesium hydroxide, or lithium nitrate.

The average thickness of the separator 140 is preferably 20 µm or less, more preferably 18 µm or less, and still more preferably 15 µm or less. In such a mode, the occupation volume of the separator 140 in the lithium secondary battery 100 decreases and therefore, the resulting lithium secondary battery 100 has a more improved energy density. The average thickness of the separator 140 is preferably 5 µm or more, more preferably 7 µm or more, and still more preferably 10 µm or more. In such a mode, the positive electrode 120 can be separated from the negative electrode 130 more reliably and the short circuit of the battery can be prevented further.

### (Electrolyte solution)

The lithium secondary battery 100 may have an electrolyte solution. The separator 140 may be wetted with the electrolyte solution or the lithium secondary battery 100 encapsulated together with the electrolyte solution may be used as a finished product. The electrolyte solution contains an electrolyte and a solvent. It is a solution having ionic conductivity and serves as a conductive path of a lithium ion. The lithium secondary battery 100 having the electrolyte solution therefore has a more reduced internal resistance and a more improved energy density, capacity, and cycle characteristic.

The electrolyte is not particularly limited insofar as it is a salt and examples include salts of Li, Na, K, Ca, or Mg. As the electrolyte, a lithium salt is preferred. The lithium salt is not particularly limited and examples include Lil, LiCl, LiBr, LiF, LiBF₄, LiPF₆, LiAsF₆, LiSO₃CF₃, LiN(SO₂F)₂, LiN(SO_{2C}F₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. The lithium salt is preferably LiN(SO₂F)₂ from the standpoint of providing a lithium secondary battery 100 having more excellent energy density, capacity, and cycle characteristic. One or more of the aforesaid lithium salts may be used either singly or in combination.

The solvent is not particularly limited and examples include dimethyl ether, diethylene glycol dimethyl ether, triethylene glycol dimethyl ether, acetonitrile, dimethyl carbonate, diethyl carbonate, ethyl methyl carbonate, ethylene carbonate, propylene carbonate, chloroethylene carbonate, fluoroethylene carbonate, difluoroethylene carbonate, trifluoromethyl propylene carbonate, methyl acetate, ethyl acetate, propyl acetate, methyl propionate, ethyl propionate, nonafluorobutyl methyl ether, nonafluorobutyl ethyl ether, tetrafluoroethyl tetrafluoropropyl ether, trimethyl phosphate, and triethyl phosphate. The solvents as described above are used singly by 1 type or in combination of two or more types

### (Use of a lithium secondary battery)

Fig. 2 shows one mode of the use of the lithium secondary battery of the present embodiment. The lithium secondary battery 100 has a positive electrode terminal 220 and a negative electrode terminal 230 for connecting the lithium secondary battery 100 to an external circuit and these terminals are bonded to a positive electrode current collector 110 and a negative electrode 130, respectively. The lithium secondary battery 100 is charged/discharged by connecting the negative electrode terminal 230 to one end of the external circuit and the positive electrode terminal 220 to the other end of the external circuit.

The lithium secondary battery 100 is charged by applying between the positive electrode terminal 220 and the negative electrode terminal 230, such a voltage that a current flows from the negative electrode terminal 230 to the positive electrode terminal 220 through the external circuit. By charging the lithium secondary battery 100, the precipitation of lithium metal occurs at the interface between the negative electrode 130 and the separator 140.

The lithium secondary battery 100 may have a solid electrolyte interfacial layer (SEI layer) 210 at the interface between the negative electrode 130 and the separator 140 by the initial charge. The SEI layer 210 to be formed is not particularly limited and it may contain a lithium-containing inorganic compound or a lithium-containing organic compound. The typical average thickness of the SEI layer is 1 nm or more and 10 µm or less.

When the SEI layer 210 is formed on the lithium secondary battery 100, the lithium metal precipitated during charging of the lithium secondary battery 100 may be deposited at the interface between the negative electrode 130 and the SEI layer 210 or may be precipitated at the interface between the SEI layer 210 and the separator 140.

When the positive electrode terminal 220 and the negative electrode terminal 230 are connected to the charged lithium secondary battery 100, the lithium secondary battery 100 is discharged. The precipitation of lithium metal generated at at least either one of the interface between the negative electrode 130 and the SEI layer 210 and the interface between the SEI layer 210 and the separator 140 is electrolytically eluted.

### (Method of manufacturing a lithium secondary battery)

A method of manufacturing the lithium secondary battery 100 as shown in Fig. 1 is not particularly limited insofar as it can provide a lithium secondary battery equipped with the aforesaid structure and examples of the method include the method as follows.

First, the positive electrode 120 is prepared by a known manufacturing method or by purchasing a commercially available one. The positive electrode 120 is manufactured, for example, as follows. The above-mentioned positive electrode active material, known conductive additive, and known binder are mixed to obtain a positive electrode mixture. The mixing ratio of them may be, for example, 50 mass% or more and 99 mass% or less of the positive electrode active material, 0.5 mass% or more and 30 mass% or less of the conductive additive, and 0.5 mass% or more and 30 mass% or less of the binder with respect to the entire positive electrode mixture. The thus-obtained positive electrode mixture is applied to one side of a metal foil (for example, Al foil) as a positive electrode current collector having a predetermined thickness (for example, 5 µm or more and 1 mm or less), and press-molded. The obtained molded body is punched to a predetermined size by punching to obtain the positive electrode 120.

Next, the above-mentioned negative electrode material, for example, a Cu foil of 1 µm or more and 1 mm or less, which has been subjected to rust prevention treatment, is used as the negative electrode 130.

Next, a separator 140 having the aforesaid structure is prepared. As the separator 140, a separator manufactured by a conventionally known method or a commercially available one may be used.

The positive electrode 120, the separator 140, and the negative electrode 130 each obtained as described above, are stacked in this order to obtain a stacked body. The stacked body thus obtained can be encapsulated with the electrolyte solution in a hermetically sealed container to obtain a lithium secondary battery 100. The hermetically sealed container is not particularly limited and examples include a laminate film.

### [Second Embodiment]

### (Lithium secondary battery)

Fig. 3 is a schematic cross-sectional view of a lithium secondary battery of Second Embodiment. As shown in Fig. 3, the lithium secondary battery 300 of Second Embodiment is equipped with a positive electrode current collector 110, a positive electrode 120 formed on one side of the positive electrode current collector 110 and having a positive electrode active material, a negative electrode 130 not having a negative electrode active material, and a solid electrolyte 310 placed between the positive electrode 120 and the negative electrode 130. The respective constitutions and preferred modes of the positive electrode current collector 110, the positive electrode 120, and the negative electrode 130 are similar to those of the lithium secondary battery 100 of the first embodiment except for what will be described below, and these constitutions of the lithium secondary battery 300 exhibit effects similar to those of the lithium secondary battery 100.

### (Solid electrolyte)

In general, a battery provided with a liquid electrolyte tends to have different physical pressure applied from the electrolyte to the surface of the negative electrode depending on the location due to the fluctuation of the liquid. On the other hand, since the lithium secondary battery 300 includes the solid electrolyte 310, the pressure applied from the solid electrolyte 310 to the surface of the negative electrode 130 becomes more uniform, and the shape of the carrier metal precipitated on the surface of the negative electrode 130 can be made more uniform. That is, according to such a mode, the carrier metal precipitated on the surface of the negative electrode 130 is further suppressed from growing in a dendrite shape, so that the cycle characteristics of the lithium secondary battery 300 are further improved.

The solid electrolyte 310 is not particularly limited insofar as it is generally used for a lithium solid secondary battery, but a known material may be appropriately selected depending on the use of the lithium secondary battery 300 and the type of carrier metal. The solid electrolyte 310 preferably has ionic conductivity and no electron conductivity. Since the solid electrolyte 310 has ionic conductivity and no electron conductivity, the internal resistance of the lithium secondary battery 300 is further reduced, and short-circuiting inside the lithium secondary battery 300 can be further suppressed. As a result, the energy density, capacity, and cycle characteristics of the lithium secondary battery 300 are further improved.

The solid electrolyte 310 is not particularly limited, and examples thereof include those containing a resin and a lithium salt. Such a resin is not particularly limited, but examples thereof include a resin having an ethylene oxide unit in the main chain and/or the side chain, an acrylic resin, a vinyl resin, an ester resin, a nylon resin, polysiloxane, polyphosphazene, polyvinylidene fluoride, polymethylmethacrylate, polyamide, polyimide, aramid, polylactic acid, polyethylene, polystyrene, polyurethane, polypropylene, polybutylene, polyacetal, polysulfone, and polytetrafluoroethylene, etc. One or more of the resins as described above are used either singly or in combination.

The lithium salt contained in the solid electrolyte 310 is not particularly limited and examples include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. One or more of the aforesaid lithium salts may be used either singly or in combination.

In general, the content ratio of the lithium salt to the resin in the solid electrolyte is determined by a ratio ([Li]/[O]) of lithium atoms which the lithium salt has to oxygen atoms which the resin has. In the solid electrolyte 310, a content ratio of the lithium salt to the resin, that is, the aforesaid ratio ([Li]/[O]) is adjusted to be preferably 0.02 or more and 0.20 or less, more preferably 0.03 or more and 0.15 or less, and still more preferably 0.04 or more and 0.12 or less.

The solid electrolyte 310 may contain a component other than the aforesaid resin and lithium salt. Such a component is not particularly limited and examples include solvents and salts other than lithium salts. The salts other than lithium salts are not particularly limited and examples include salts of Li, Na, K, Ca, and Mg.

The solvent is not particularly limited and examples include those given as the solvent of the electrolyte solution which can be contained in the aforesaid lithium secondary battery 100.

The average thickness of the solid electrolyte 310 is preferably 20 µm or less, more preferably 18 µm or less, and still more preferably 15 µm or less. In such a mode, an occupation volume of the solid electrolyte 310 in the lithium secondary battery 300 decreases so that the resulting lithium secondary battery 300 has a more improved energy density. The average thickness of the solid electrolyte 310 is preferably 5 µm or more, more preferably 7 µm or more, and still more preferably 10 µm or more. In such a mode, the positive electrode 120 can be separated from the negative electrode 130 more reliably and a short circuit of the resulting battery can be suppressed further.

Incidentally, in the present specification, "the solid electrolyte" embraces a gel electrolyte. The gel electrolyte is not particularly limited and examples include those containing a high molecule, an organic solvent, and a lithium salt. The high molecule in the gel electrolyte is not particularly limited and examples include copolymers of polyethylene and/or polyethylene oxide, polyvinylidene fluoride, and copolymers of polyvinylidene fluoride and hexafluoropropylene.

Note that, in Fig. 3, a solid electrolyte interfacial layer (SEI layer) may be formed on the surface of the negative electrode 130. The SEI layer formed is not particularly limited, but may contain, for example, an inorganic compound containing lithium, and an organic compound containing lithium, etc. The typical average thickness of the SEI layer is 1 nm or more and 10 µm or less. When the SEI layer is formed on the lithium secondary battery 300, the lithium metal precipitated by charging may be precipitated at the interface between the negative electrode 130 and the SEI layer, or may be precipitated at the interface between the SEI layer and the solid electrolyte 310.

### (Method of manufacturing a secondary battery)

The lithium secondary battery 300 can be manufactured in a manner similar to that of the lithium secondary battery 100 of First Embodiment except for the use of the solid electrolyte instead of the separator.

The method of manufacturing a solid electrolyte 310 is not particularly limited insofar as it is a method capable of providing the aforesaid solid electrolyte 310 and it may be performed, for example, as follows. A resin and a lithium salt conventionally used for a solid electrolyte (for example, the aforesaid resin as a resin which can be contained in the solid electrolyte 310, and a lithium salt) are dissolved in an organic solvent. The solution thus obtained is cast on a molding substrate to have a predetermined thickness and thus, the solid electrolyte 310 is obtained. Here, the mixing ratio of the resin and the lithium salt may be determined based on a ratio ([Li]/[O]) of lithium atoms of the lithium salt to oxygen atoms of the resin as described above. The aforesaid ratio ([Li]/[O]) is, for example, 0.02 or more and 0.20 or less. Further, the organic solvent is not particularly limited, but acetonitrile may be used, for example. The molding substrate is not particularly limited and, for example, a PET film or a glass substrate may be used.

The aforesaid embodiments are examples for describing the present invention. They do not intend to limit the present invention only thereto and the present invention may have various modifications without departing from the gist thereof.

For example, in the lithium secondary battery 100 of First Embodiment and the lithium secondary battery 300 of Second Embodiment, the positive electrode 120 may be formed on both sides of the positive electrode current collector 110. In this case, the lithium secondary battery is equipped with the two positive electrodes 120, the two negative electrodes 130 placed so as to face the respective positive electrodes 120, and the two separators 140 or solid electrolytes 310 placed between each of the positive electrodes 120 and the negative electrodes 130. The lithium secondary battery in such a mode has more improved capacity.

The lithium secondary battery of the present embodiment may be a lithium solid secondary battery. A battery in such a mode does not need an electrolyte solution so that it is free from a problem of electrolyte solution leakage and has more improved safety.

The lithium secondary battery of the present embodiment may have a current collector placed so as to be contact with the negative electrode. Such a current collector is not particularly limited and examples include current correctors usable as a negative electrode material. When the lithium secondary battery has no negative electrode current collector, the negative electrode itself serves as a current collector.

The lithium secondary battery of the present embodiment may have, at each of the positive electrode current collector and the negative electrode, a terminal for connecting it to an external circuit. For example, a metal terminal (for example, Al, Ni, or the like) having a length of 10 µm or more and 1 mm or less may be bonded to one or both of the positive electrode current collector and the negative electrode. For bonding, a conventionally known method may be used and for example, ultrasonic welding is usable.

The term "an energy density is high" or "has a high energy density" as used herein means that the capacity of a battery per total volume or total mass is high. It is preferably 800 Wh/L or more or 350 Wh/kg or more, more preferably 900 Wh/L or more or 400 Wh/kg or more, and still more preferably 1000 Wh/L or more or 450 Wh/kg or more.

The term "having an excellent cycle characteristic" as used herein means that a decreasing ratio of the capacity of a battery is small before and after the expected number of charging/discharging cycles in ordinary use. Described specifically, it means that when a first discharge capacity after the initial charge/discharge and a capacity after the number of charging/discharging cycles expected in ordinary use are compared, the capacity after charging/discharging cycles has hardly decreased compared with the first discharge capacity after the initial charge/discharge. The "number expected in ordinary use" varies depending on the usage of the lithium secondary battery and it is, for example, 30 times, 50 times, 70 times, 100 times, 300 times, or 500 times. The term "capacity after charging/discharging cycles hardly decreased compared with the first discharge capacity after the initial charge/discharge" means, though differing depending on the usage of the lithium secondary battery, that the capacity after charging/discharging cycles is, for example, 75% or more, 80% or more, or 85% or more, each in the first discharge capacity after the initial charge/discharge.

### Examples

The present invention will hereinafter be described in detail by Examples and Comparative Examples. The present invention is not limited by the following Examples.

### [Manufacture of a lithium secondary battery]

The respective steps for the manufacture of a lithium secondary battery were performed as follows.

### (Formation of a negative electrode)

A 10-µm Cu foil formed for each of the examples below is used as a negative electrode. The negative electrode is subjected to rust prevention treatment or the like.

### (Formation of a separator)

As a separator, that obtained by coating 2-µm polyvinylidene fluoride (PVDF) on both sides of a 12-µm polyethylene microporous membrane and having a predetermined size (50mm × 50mm) was formed.

### (Formation of a positive electrode)

A mixture of 96 parts by mass of LiNi _{0.85}Co _{0.12}Mn _{0.03}O ₂ as a positive electrode active material, 2 parts by mass of carbon black as a conductive additive, and 2 parts by mass of polyvinylidene fluoride (PVDF) as a binder was applied onto one side of a 12-µm Al foil serving as a positive electrode current collector, followed by press molding. The molded product thus obtained was punched into a predetermined size (40mm × 40mm) by punching to obtain a positive electrode.

### (Assembly of a battery)

As an electrolyte solution, a 4M dimethoxyethane (DME) solution of LiN(SO₂F)₂(LFSI) was prepared. Then, a stacked body was obtained by stacking a positive electrode, a separator, and a negative electrode in order of mention. Stacking was performed by placing a buffering function layer to face the negative electrode when the separator had the buffering function layer thereon and by placing a metal layer to face the separator when the negative electrode had the metal layer thereon. Further, a 100-µm Al terminal and a 100-µm Ni terminal were bonded to the positive electrode and the negative electrode, respectively by ultrasonic welding and then the bonded body was inserted into a laminate-film outer container. Then, the aforesaid electrolyte solution was poured in the outer container. The resulting outer container was hermetically sealed to obtain a lithium second battery.

### [Example 1]

A secondary battery including a positive electrode, a separator, and a negative electrode was prepared by using Cu formed by rolling with an orientation plane of a (200) plane and a surface roughness maximum height Rz of 0.3 µm as a negative electrode.

### [Example 2]

A secondary battery including a positive electrode, a separator, and a negative electrode was prepared by using Cu formed by rolling with an orientation plane of a (200) plane and a surface roughness maximum height Rz of 0.7 µm as a negative electrode.

### [Example 3]

A secondary battery including a positive electrode, a separator, and a negative electrode was prepared by using Cu formed by rolling with an orientation plane of a (220) plane and a surface roughness maximum height Rz of 0.7 µm as a negative electrode.

### [Example 4]

A secondary battery including a positive electrode, a separator, and a negative electrode was prepared by using Cu formed by rolling with an orientation plane of a (200) plane and a surface roughness maximum height Rz of 1.0 µm as a negative electrode.

### [Comparative Example 1]

A secondary battery including a positive electrode, a separator, and a negative electrode was prepared by using Cu formed by rolling with an orientation plane of a (200) plane and a surface roughness maximum height Rz of 1.2 µm as a negative electrode.

### [Comparative Example 2]

A secondary battery including a positive electrode, a separator, and a negative electrode was prepared by using Cu being an electrolytic copper foil formed by electroplating and having an orientation plane of a (111) plane and a surface roughness maximum height Rz of 0.8 µm as a negative electrode.

### [Comparative Example 3]

A secondary battery including a positive electrode, a separator, and a negative electrode was prepared by using Cu being an electrolytic copper foil formed by electroplating and having an orientation plane of a (111) plane and a surface roughness maximum height Rz of 1.5 µm as a negative electrode.

### [Evaluation of energy density and cycle characteristic]

The cycle characteristic of each of the lithium secondary batteries manufactured in Examples and Comparative Examples was evaluated as follows.

After each of the lithium secondary batteries thus manufactured was charged (initial charge) at 0.2 mAh/cm² to a voltage of 4.2 V, it was discharged (initial discharge) at 0.2 mAh/cm² to a voltage of 3.0 V. Then, a charging/discharging cycle consisting of charging at 1.0 mAh/cm² to a voltage of 4.2 V and discharging at 1.0 mAh/cm² to a voltage of 3.0 V was further repeated 49 times at a temperature condition of 25°C. In any of Examples and Comparative Examples, the capacity (initial capacity) determined from the initial charge was 60 mAh. Supposing that the initial charge/discharge cycle is counted as a first cycle, a proportion of a discharge capacity determined from the 50th cycle discharge of the charge/discharge cycle to a discharge capacity determined from the 2nd cycle discharge of the charge/discharge cycle was calculated as a capacity maintaining ratio (%) and was used as an index of the cycle characteristic. This means that the higher the capacity maintaining ratio, the more excellent the cycle characteristic. The capacity maintaining ratio in each example is shown in Table 1.

**[Table 1]**

| Sample No. | Manufacturing Method | Rz (µm) | Orientation plane | Capacity maintaining ratio (%) |
|---|---|---|---|---|
| Example 1 | Rolling | 0.3 | 200 | 90 |
| Example 2 | Rolling | 0.7 | 200 | 90 |
| Example 3 | Rolling | 0.7 | 220 | 90 |
| Example 4 | Rolling | 1.0 | 200 | 88 |
| Comparative Example 1 | Rolling | 1.2 | 200 | 70 |
| Comparative Example 2 | Electrolysis | 0.8 | 111 | 70 |
| Comparative Example 3 | Electrolysis | 1.5 | 111 | 71 |

As shown in Table 1, the lithium secondary batteries of Examples 1 to 4 showed a relatively high capacity maintaining ratio of 88% to 90%. On the other hand, in the lithium secondary batteries of Comparative Examples 1 to 3, the capacity maintaining ratio was 70 to 71%. That is, it can be seen that in Examples 1 to 4 in which the orientation plane is the (200) plane or the (220) plane and Cu having a surface roughness maximum height Rz of 1.0 µm or less is used, the capacity maintaining ratio is high and the cycle characteristics are excellent in comparison with Comparative examples 1 to 3.

### Industrial Applicability

The lithium secondary battery of the present invention has a high energy density and an excellent cycle characteristic so that it has industrial applicability as a power storage device to be used for various uses.

### Reference Signs List

100, 300: lithium secondary battery, 110: positive electrode current collector, 120: positive electrode, 130: negative electrode, 140: separator, 210: solid electrolyte interfacial layer (SEI layer), 220: positive electrode terminal, 230: negative electrode terminal, 310: solid electrolyte.

## Claims

1. A lithium secondary battery, comprising:
a positive electrode; and
a negative electrode not having a negative electrode active material,
wherein the negative electrode is Cu having a surface roughness maximum height Rz of 1.0 µm or less and an orientation plane of a (200) plane or a (220) plane.

2. The lithium secondary battery according to claim 1, wherein the Cu is formed by rolling.

3. The lithium secondary battery according to claim 1 or 2, wherein a lithium metal is precipitated on the surface of the negative electrode, and the precipitated lithium metal is dissolved to perform charging/discharging.

4. The lithium secondary battery according to any one of claims 1 to 3, wherein the negative electrode does not have a lithium foil on the surface thereof before initial charge.

5. The lithium secondary battery according to any one of claims 1 to 4, wherein the battery has an energy density of 350 Wh/kg or more.

## Patentansprüche

1. Lithiumsekundärbatterie, die Folgendes umfasst:
eine positive Elektrode; und
eine negative Elektrode, die kein aktives Negative-Elektrode-Material aufweist,
wobei die negative Elektrode aus Cu besteht, das eine maximale Oberflächenrauheitstiefe Rz von 1,0 µm oder weniger und eine Orientierungsebene einer (200)-Ebene oder einer (220)-Ebene aufweist.

2. Lithiumsekundärbatterie nach Anspruch 1, wobei das Cu durch Walzen ausgebildet ist.

3. Lithiumsekundärbatterie nach Anspruch 1 oder 2, wobei ein Lithiummetall auf der Oberfläche der negativen Elektrode abgeschieden ist und das abgeschiedene Lithiummetall aufgelöst wird, um Laden/Entladen durchzuführen.

4. Lithiumsekundärbatterie nach einem der Ansprüche 1 bis 3, wobei die negative Elektrode vor dem ersten Laden keine Lithiumfolie auf der Oberfläche derselben aufweist.

5. Lithiumsekundärbatterie nach einem der Ansprüche 1 bis 4, wobei die Batterie eine Energiedichte von 350 Wh/kg oder mehr aufweist.

## Revendications

1. Batterie secondaire au lithium, comprenant :
une électrode positive ; et
une électrode négative ne présentant pas de matériau actif d'électrode négative, dans laquelle l'électrode négative est du Cu présentant une hauteur maximale de rugosité de surface Rz de 1,0 µm ou moins et un plan d'orientation d'un plan (200) ou d'un plan (220).

2. Batterie secondaire au lithium selon la revendication 1, dans laquelle le Cu est formé par laminage.

3. Batterie secondaire au lithium selon la revendication 1 ou 2, dans laquelle un métal de lithium est précipité sur la surface de l'électrode négative, et le métal de lithium précipité est dissous pour effectuer une charge/décharge.

4. Batterie secondaire au lithium selon l'une quelconque des revendications 1 à 3, dans laquelle l'électrode négative ne présente pas de feuille de lithium sur sa surface avant la charge initiale.

5. Batterie secondaire au lithium selon l'une quelconque des revendications 1 à 4, dans laquelle la batterie présente une densité d'énergie de 350 Wh/kg ou plus.
